# EUROPEAN PATENT APPLICATION

(11) **EP 4 825 165 A1**
(43) Date of publication of application: **21.10.2026**
(21) Application number: 25170361.7
(22) Date of filing: 14.04.2025
(51) Int. Cl.: A01K 63/04, C02F 1/00, C02F 1/20, C02F 103/20

(54) **APPARATUS FOR REGULATING GAS IN A FLUID AND A METHOD THEREOF**

(71) Applicant: Alvestad AS, 0154 Oslo (NO)
(72) Inventor: Alvestad, Runar, 0362 Oslo (NO); Cortes, Angel, 5551886 Puerto Varas (CL); Ulgenes, Yngve, 7054 Ranheim (NO)
(74) Representative: AWA Norway AS

(57) **Abstract**

The invention concerns an apparatus and a method thereof for regulating, preferably reducing, an amount of gas such as carbon dioxide (*CO₂*) in a fluid. The apparatus comprises a container having a container top, a container base, an upper divider and a lower divider. The upper divider and the lower divider are arranged with vertical offsets from the container top, forming an upper container chamber, a middle container chamber and a lower container chamber. Both the upper divider and the lower divider display a plurality of throughgoing holes to allow fluids to flow therethrough.

## Description

### Technical Field

The present invention relates generally to a system for regulating an amount of gas in a fluid and, more particularly, to biological treatment systems which use floating filter media to biologically treat wastewater.

### Background

Carbon dioxide *(CO₂)* is a waste gas from biological processes, including fish metabolism, and it is easily soluble in water. In intensive fish farming, the accumulation of this gas in the water is one of the main problems that leads to reduced growth, increased stress through many side effects, and increased mortality for the fish. Therefore, the removal of *CO₂* and control of *CO₂* levels in the water where fish is kept is crucial for achieving controlled and profitable fish production.

In addition, the control of other gases, especially oxygen (*O₂*) and nitrogen (*N₂*), to achieve acceptable levels for parameters such as total gas pressure (TGP) is also essential at certain stages of fish farming and during the handling of fish.

A water treatment system designed to remove *CO₂* from water is known. The existing technology, as exemplified by WO 2009/157779 A1, provides a method and device for aerating water, particularly from sources such as fish tanks, by implementing aeration media arranged to offer a large contact surface. This arrangement facilitates efficient mass transport and gas transfer between the liquid and gas phases, typically within a counter-current flow system.

However, while the current system addresses basic efficiency and reduces biological fouling through periodic automated cleaning phases, there remains a need for improvements that could further enhance mass transport and gas transfer. Such improvements could include increasing the available surface area for gas exchange, reducing the tendency for media clogging, and achieving higher energy efficiency.

These advancements would be beneficial in optimizing the aeration process, ensuring more effective oxygenation or CO₂ removal, decreasing maintenance requirements, and lowering energy consumption, thereby providing a more robust and cost-effective solution for water treatment in aquaculture and other applications.

Another example of a water treatment system for removal of *CO₂* is found in the Chinese patent publication CN118388023A1 describing a system and method for the treatment of circulating water in aquaculture systems. The primary focus is on enhancing the separation and removal efficiency of small and minute solid particles, as well as dissolved *CO₂* in the water. The system is designed to recycle treated water back into the aquaculture pond, effectively improving water quality by efficiently removing pollutants and maintaining optimal conditions for aquatic life. The known water treatment system uses aerators blowing air into the water.

One disadvantage of these prior art systems is that they are complex, cumbersome to scale and expensive to manufacture.

It is therefore an objective of the present invention to provide an apparatus, system, and method for regulating gases in a fluid that is efficient, scalable, convenient, and inexpensive.

Another objective of the present invention is to provide such an apparatus, system and method that can be cleaned at a regular basis with minimal impact on operation.

A further objective of the present invention is to provide such an apparatus, system and method that can be cleaned at various degrees in a convenient and efficient way.

A further objective of the present invention is to provide such an apparatus, system and method that can be ensure efficient and convenient cleaning of all impacted parts of the apparatus.

A further objective of the present invention is to provide such an apparatus, system and method that avoid reintroducing undesired gases into the system.

Other objectives will be apparent from the discussions of advantages / effects of the various systems and methods presented hereinafter.

### Summary of the Invention

The present invention is set forth and characterized in the main claims, while the dependent claims describe other characteristics of the invention.

In a first aspect, the invention concerns an apparatus suitable for regulating, preferably reducing, an amount of gas such as carbon dioxide (*CO₂*) in a fluid. The fluid may be substantially water such as seawater.

The apparatus of the first aspect comprises a container suitable for containing fluids, The container comprises a container top, a container base, an upper divider and a lower divider, wherein the upper divider and the lower divider are arranged with vertical offsets from the container top, forming an upper container chamber, a middle container chamber and a lower container chamber. Both the upper divider and the lower divider display a plurality of throughgoing holes to allow fluids to flow therethrough. For example, at least part of the lower divider may be a grate. The minimum height of the container chamber may be equal or approximately equal the minimum height of the middle container chamber. Further, the minimum height of the lower container chamber may be larger than the upper and middle container chambers.

A center axis through the container top and the container base defines a vertical direction of the container.

The container has preferably a cross-sectional area along its center axis that is circular or oval.

The container further comprises a fluid inlet configured to allow fluid to flow into the upper container chamber, a fluid outlet, preferably a plurality of fluid outlets, configured to allow fluid to flow out of the lower container chamber, a droplet generator system to generate droplets / clusters inside the middle container chamber of the fluid flowing from the upper container chamber and a gas conduit. The gas conduit extends at least to the lower container chamber, preferably from the container top. Note that the droplet generator system signifies hereinafter any system that can disperse or fragmentate a fluid flow into a plurality of fluid clusters, thereby increasing the through-flowing fluid's surface.

The container top is preferably covering a major portion of the container's horizontal cross section, thereby avoiding, or at least significantly reducing, any spillage of fluid entering the upper container chamber via the fluid inlet. More preferably the container top covers at least 60 % of the container's horizontal cross section, even more preferably at least 70 %, even more preferably at least 80 %, even more preferably at least 90 %, for example the entire cross section. Such a closed, or partly closed, design allows a higher rate of fluid flow compared prior art solution.

The apparatus preferably also comprises a fluid conduit in fluid communication with the fluid outlet. In case of a plurality of fluid outlets, the apparatus may comprise a fluid conduit in fluid communication with each of the fluid outlets.

The droplet generator system is preferably arranged at least partly within the middle container chamber, more preferably fully within the middle container chamber, and may constitute a plurality of individual droplet generators in form of mesh formed units. The units may have any 3-dimensional shapes such as balls or cubes.

The gas conduit further comprises a gas inlet to allow gas to flow into the gas conduit from a gas source preferably located outside the container, and an inner gas outlet located within the lower container chamber to allow gas to flow out of the gas conduit and into the middle container chamber.

The principle of operating the apparatus may be described as follows: Fluid such as water is guided through the fluid inlet into the upper container chamber, for example by self-fall and/or use of a pump and let out of the lower container chamber via the fluid outlet. The upper divider separating the upper container chamber, and the middle container chamber ensures that the fluid is distributed evenly over a cross-section of the container and flows (e.g. trickles) down through the upper divider and the droplet generator system. The latter is configured to split water in an efficient way while the fluid is flowing through and can e.g., be composed of a plurality of meshed floating balls. The droplet generator system may be arranged on top of the lower divider separating the middle container chamber and the lower container chamber. Gas such as air is led into the gas conduit extending to the lower container chamber, e.g. by blowing the gas using a fan arranged at the gas inlet of the gas conduit and is sent out through the inner gas outlet underneath the lower divider. Due to the generated high pressure in the lower container chamber the gas raises through the lower divider and through the droplet generator system to cause an exchange of gas molecules from the generated fluid droplets to the raising gas. The resulting gas containing the released gas molecules from the fluid is then guided away from the container via an external gas outlet. The transport of gas out of the container can be aided by an under-pressure device such as the above-mentioned fan rotating in opposite direction as when an overpressure is created during gas intake. A dedicated second fan, extractor fan, for creating the desired under pressure may also be envisaged. Due to the gas flow, the container should preferably be designed to tolerate under-pressures down to a total pressure of 90 kPa (i.e. 10 % below atmospheric pressure) and overpressures up to a total pressure of 150 kPa. The type and size of the droplet generator system may be calculated based on the required flow of fluids to be stripped of gas / aerated.

Alternatively, or in addition, another type of gas such as oxygen gas (*O₂*) may be added to the container in case it is desired to raise the level of the type of gas into the fluid.

By use of the apparatus in accordance with the first aspect, reduction, balancing and/or addition of gases from/to a fluid at atmospheric pressure can be performed at a higher fluid through-put and/or a higher degree of efficiency compared to known apparatus.

The apparatus may be any apparatus for exchanging molecules between a gas and a fluid crossing in opposite direction. Examples of such apparatuses are an aerator for aquacultures such as fish tanks or well boats and apparatuses for scrubbers, cooling towers or the like.

The fluid transport control may involve one or more valves configured to shut on/off the flow and/or reducing/increasing the flow. The latter may be achieved by one or more throttle valves.

The gas conduit is preferably extending to the lower container chamber from the middle container chamber through the lower divider, more preferably also through the upper divider and through the entire height of the middle container chamber. Further, at least a part of the gas conduit may extend vertically at or near the center axis of the container. Positioning the gas inlet at a higher level within the container minimizes the risk of unwanted fluid entering a gas tube connected to the gas inlet outside the container. This precaution is especially preferable when the container is filled beyond its operational level, such as during thorough cleaning (see description below).

In another exemplary configuration, the container comprises a fluid distributor arranged withing the upper container chamber, wherein the fluid distributor is configured to distribute the fluid along at least part of the upper divider, preferably more than 80 % of the upper divider, prior to entering the middle container chamber. In a specific example, the fluid distributor allows distribution of the fluid to the entire, or almost the entire, upper divider. The fluid distributor may for example be one or more annular rings arranged on and/or above the upper divider. Such annular ring(s) may display one or more recesses and/or holes for releasing / sloshing water. Said fluid distributor assure that the incoming fluid used most or all the cross section of the upper divider, thereby rendering the gas exchange within the droplet generator system more efficient. Such a dedicated fluid distributor is particularly useful for large apparatuses configured to manage large flow of fluids.

In another exemplary configuration, the apparatus further comprises a regular cleaning system (RCS) configured to clean at least one of the components / parts situated inside the container, preferably by using fluid from the lower container chamber. This configuration avoids, or at least reduces, undesired accumulatio of debris within the container.

In another exemplary configuration, the RCS comprises an upper regular cleaning system (U-RCS) comprising an upper nozzle. The U-RCS may be configured to create a stream of fluid towards the droplet generator system, preferably in form of a jet stream. At least a flow outlet of the upper nozzle is arranged within the middle container chamber. This arrangement ensures effective and controlled cleaning of the droplet generator system.

In another exemplary configuration, the apparatus further comprises a regular cleaning system (RCS) conduit suitable for guiding fluid to the upper nozzle of the U-RCS. The RCS conduit may at one end be in fluid communication with the lower container chamber.

In another exemplary configuration, the apparatus also comprises a regular cleaning system (RCS) pump configured to allow transport of fluid from the lower container chamber to the upper nozzle of the U-RCS.

More advantageously, the U-RCS may comprise a plurality of upper nozzles configured to produce a multiple stream of fluid towards the droplet generator system. These upper nozzles may be distributed symmetrically around the container at or close to a common horizontal plane intersecting the droplet generator system. The number of upper nozzles may be an even number such as 2, 4, 6 or 8. With this particular arrangement, the effectiveness of the cleaning process is further enhanced since inter alia a more complete cleaning of the droplet generator system is ensured. Further, if the droplet generator system is configured to be mobile within the middle container chamber, e.g. by comprising a plurality of meshed free moving spheres, a jet stream would set parts or the whole droplet generator system in motion, further elevating the cleaning effectiveness.

The upper nozzle(s) may be oriented with an angle relative to a horizontal, tangential line from the container wall which is less than 90°. In the case of using the above-mentioned mobile droplet generator system (e.g. using the meshed free-moving spheres), the non-perpendicular angle from the tangential line would set the droplet generator system in a rotating motion which would further increase the cleaning effectiveness. The non-perpendicular angle is preferably less than 80°, more preferably less that 70°, even more preferably less than 60°, for example 54°. A preferable range of angles is between 30° and 70°.

In another exemplary configuration, the apparatus further comprises a lower regular cleaning system (L-RCS) for primarily cleaning the container base. The L-RCS may comprise a lower nozzle configured to create a flow of fluid, preferably in form of a jet stream, to ensure that any solid state sediments are not allowed to accumulate on or near the container base above a certain maximum level but instead are removed / flushed towards and out of the fluid outlet(s) and/or one or more drain outlets set in fluid communication with the lower container chamber. The L-RCS is preferably configured such that the jet stream is directed towards and/or parallel with the container base. At least the part of the lower nozzle containing a flow outlet is arranged within the lower container chamber, advantageously near or at the container base.

In another exemplary configuration, the apparatus further comprises one or more RCS conduits suitable for guiding fluid to the lower nozzle of the L-RCS The RCS conduit(s) may at one end be in fluid communication with the lower container chamber. The RCS conduit(s) may be one or more dedicated conduits and/or (if applicable) the same RCS conduit(s) used to transport fluid to the upper nozzle(s).

In another exemplary configuration, the apparatus also comprises one or more regular cleaning system (RCS) pumps configured to allow transport of fluid from the lower container chamber to the lower nozzle. The RCS pump(s) may be a dedicated pump and/or (if applicable) the same RCS pump(s) used to allow transport of fluid to the upper nozzle(s).

More advantageously, the L-RCS may comprise a plurality of lower nozzles configured to produce a multiple stream of fluid towards the container base. These lower nozzles may be distributed symmetrically around the container at or close to a common horizontal plane at or immediately above the container base. The number of lower nozzles may be an even number such as 2, 4, 6 or 8, for example a number corresponding to the number of upper nozzle (if applicable).

The lower nozzle(s) may be oriented with an angle relative to a horizontal, tangential line from the container wall which is less than 90°, thereby enabling generation of a swirling motion of the accumulated sediments. The non-perpendicular angle is preferably less than 80°, more preferably less that 70°, even more preferably less than 60°, even more preferably less than 50°, for example 40°. A preferable range of angles is between 30° and 70°.

In a comparable way as for the plurality of upper nozzles mentioned above, the arrangement of a plurality of lower nozzles further enhances removal / flushing of the accumulated sediments on the container base towards and out of the fluid outlet(s) and/or the drain outlet(s).

In another exemplary configuration, the apparatus includes both the U-RCS and the L-RCS as described above. For this particular configuration, the RCS conduit(s) may comprise one or more first branches suitable for guiding fluid to the upper nozzle(s) and one or more second branches suitable for guiding fluid to the lower nozzle(s). For control of flow to the respective upper and lower nozzle(s) one or more regular cleaning system (RCS) valves may be arranged on the RCS conduit(s), for example one or more RCS valves on the first branch(es) and one or more RCS valves on the second branch(es). In addition to enable efficient cleaning / flushing of both the droplet generator system and the container base, the configuration having one or more common RCS conduits ensure a high degree of control and flexibility with a minimum amount of equipment necessary.

In another exemplary configuration, at least a part of the container base is slanted downwards towards one or more drain outlets to ensure removal of sediments sticking to the container bottom during or after operation by use of the above-described L-RCS.

To further increase effectiveness of the flushing/removal, the slant has preferably an angle towards the horizontal plane of the container of at least 4 degrees, more preferably at least 5 degrees, even more preferably at least 6 degrees, even more preferably at least 7 degrees, even more preferably at least 8 degrees, for example 10 degrees.

The sediment removal may be controlled by power adjustment(s) of the RCS pump(s) and/or adjustment(s) of the RCS valve(s).

The slanting design of the container base may take any form that results in a more effective removal of the sediments towards fluid outlet(s) and/or the dedicated drain outlet(s). For example, the entire surface area of the container base may have a slope (for example a fixed slant angle) directed to drain outlet(s) located at a lowermost position of the container base within and/or adjacent the vertical wall of the container. Alternatively, the entire surface area may have a funnel shape sloping towards drain outlet(s) situated a distant from the vertical wall(s) of the container, for example at or near the container's vertical center axis. Alternatively, the container base may comprise a plurality of surface areas having different slopes for guiding sediments to a common drain outlet or multiple drain outlets.

Having a slanted container base and L-RCS is particularly useful for aquaculture plants such as cleaning water in fish farms since these aquacultures generate a high amount of sediments / solid particulates such as fecal matter.

If the container has a shape different from a cylinder, an equivalent inner diameter can be calculated from the following formula *D_{eq}* = 2*sqrt(*Aₕ*/π), where *Aₕ* is the horizontal cross section of the container.

In another exemplary configuration, the fluid conduit comprises a main branch suitable for guiding fluid to an exterior location, for example an aquaculture system such as a fish tank, a feedback branch suitable for guiding fluid back into the upper container chamber, a fluid pump suitable for pumping fluid from the fluid outlet to the upper container chamber via the feedback branch and a control valve suitable for controlling transport of fluid into the main branch and the feedback branch, respectively. By use of this arrangement a more thorough cleaning may be achieved additionally or alternatively to the cleaning by the U-RCS and/or L-RCS described above. The cleaning may be obtained by circulating the fluid using the feedback branch. In case of cleaning an aquaculture system, it may be necessary to close the fluid communication with the aquaculture system prior to initiating the fluid circulation. Alternatively, or in addition, a conduit system configuration may be envisaged which allows the above-mentioned RCS-pump(s) to facilitate both the RCS process and the thorough cleaning process.

The feedback branch may be in fluid communication with the fluid container inlet, for example via a common inlet tube.

In another exemplary configuration, the container further comprises a bubble suppressing mechanism arranged within a lower half of the lower container chamber to avoid or reduce bubbles in the fluid being released through the fluid outlet(s).

The bubble suppressing mechanism may comprise an inner tube having one end in fluid communication with the fluid outlet and a closed or semi-closed opposite end distant from the inner container wall, wherein a part of the inner tube facing towards the container base displays at least one throughgoing hole.

In case of gas regulation of an aquaculture system by the inventive apparatus, the use of such a bubble suppressing mechanism may avoid, or at least significantly reduce, exposure of undesired gas, or undesired level of a gas, in the aquaculture.

In a second aspect, the invention concerns a system for regulating a gas in a tank of fluid by use of at least one apparatus of the first aspect, wherein the fluid inlet and the fluid outlet are in fluid communication with the tank.

In an exemplary configuration of the second aspect, the system comprises a plurality of tanks in fluid communication with a common apparatus of the first aspect. For example, a system of the third aspect may comprise a large tank and a small tank, wherein, the large tank is in fluid communication with a plurality of apparatuses while the small tank is in fluid communication with only one apparatus. The term 'small tank' means a tank having a smaller inner volume than the corresponding volume of the large tank, for example less than half the volume.

In a third aspect, the invention concerns a method for regulating an amount of gas in a fluid by use of an apparatus in accordance with the first aspect.

The method comprises the following steps:
*A:* initiating a flow of fluid into the upper container chamber through the fluid inlet at an average fluid flow rate *F_{F};*
*B:* distributing the flow of fluid across the upper divider, e.g., by use of a dedicated fluid distributor; and
*C:* pressurizing the gas conduit to ensure a flow of gas from the gas source, out of the inner gas outlet and further out of the container via an outer gas outlet located above the droplet generator system, wherein the average flow of gas is above a minimum threshold gas flow rate *F_{G}, ₘᵢₙ* depending on the fluid flow rate *F_{F}.*

For example, a typical average fluid flow rate F_{F} is 1 m³/s while the minimum or average gas flow rate *F_{G}, ₘᵢₙ* may be more than 5 times the average fluid flow rate F_{F}, i.e. a gas flow rate is 5 m³/s. However, the minimum or average gas flow rate *F_{G,min}* depends on the average fluid flow rate *F_{F}.* The ratio range gas flow / fluid flow may be between 2 and 10.

In an exemplary process of the third aspect for performing the above-mentioned thorough cleaning, the method further comprises the steps of
*D:* stopping the flow of gas within the gas conduit;
*E:* closing the main branch;
*F:* filling the container with fluid to a level above a predetermined cleaning level, preferably above 80 % of the inner height of the container, more preferably above 90 % of the inner height, e.g. completely filled up;
*G:* cleaning an interior of the container by using at least one of
   adding a cleaning agent to the fluid withing the container and
   using a cleaning system forming a part of the apparatus, e.g. the RCS;
*H:* lowering the amount of fluid within the container to a level at or below a predetermined operational level, preferably to a level below the lower divider, more preferably completely emptying the container, and
I: opening the main branch.

If cleaning agent is added, and if the apparatus form part of an aquaculture plant, it is particularly preferrable to completely emptying the container to avoid that the cleaning agent is introduced into any aquaculture.

The lowering of the amount of fluid in step H may take place through a separated drain outlet and/or through the main branch. In the latter case, steps H and I are performed simultaneously.

If desired, steps F to H may be repeated a number of times in order to increase the degree of thorough cleaning.

In another exemplary process of the third aspect, the method between step E and step H further comprises the steps of
opening the feedback branch for flow of fluid;
ensuring a circulation of fluid between the lower container chamber and the upper container chamber via the feedback branch by use of a dedicated pump and/or the RCS pump; and
closing the feedback branch for flow of fluid.

In another exemplary process of the third aspect, the method further comprises the step of flushing the droplet generator system by directing a flow of fluid from the upper nozzle of the U-RCS at a fluid pressure above a predetermined minimum fluid pressure, e.g. higher than 100 kPa, more preferably higher than 200 kPa. A preferred range may be between 400 kPa and 600 kPa.

In another exemplary process of the third aspect, the method further comprises the step of flushing the container base by directing a flow of fluid from the lower nozzle of the L-RCS at a fluid pressure above a predetermined minimum fluid pressure, e.g., higher than 100 kPa, more preferably higher than 200 kPa. A preferred range may be between 400 kPa and 600 kPa.

In another exemplary process of the third aspect, the method further comprises the step of regulating the flow of fluid flowing through the first branch and the second branch by adjusting at least one of the RCS valve systems controlling the flow of fluid into the first and second branches and the RCS pump.

In another exemplary process of the third aspect, the ratio between the average fluid flow rate *F_{F} (m³*/*s)* and the inner average cross sectional area *A (m²)* of the container is below 5 *cm*/*s,* preferably below 4 *cm*/*s,* more preferably below 3 *cm*/*s,* e.g. 2,5 *cm*/*s.*

In the following description, numerous specific details are introduced to provide a thorough understanding of embodiments of the claimed apparatus, system, and method. One skilled in the relevant art, however, will recognize that these embodiments can be practiced without one or more of the specific details, or with other alternative sequence of steps.

### Brief Description of the Figures

Figure 1 provides a schematic representation of an aquaculture system in accordance with the invention. Figure 1A depicts the system, which includes multiple water-containing tanks connected to several water treatment units (WTUs). Figure 1B offers a detailed view of one of these WTUs, illustrating a first embodiment of the invention.
Figure 2A illustrates the WTU with a portion of its sidewall removed to reveal its interior. Figures 2B and 2C present top view cross-sections of the WTU along sections A-A and B-B, respectively. Additionally, Figures 2B and 2C differ from Figure 2A by including a regular cleaning system (RCS).
Figure 3 illustrates the WTU of figure 2, wherein figure 3A shows the WTU with the RCS and a droplet generation system, while figure 3B shows a detailed view of a RCS pump and RCS pipes distributing water into the WTU.
Figure 4 shows in detail a meshed sphere constituting part of the droplet generation system.
Figure 5 shows upper high pressure nozzles forming part of the RCS and their orientation relative to the WTU's vertical wall.
Figure 6 presents a cross-sectional view of the portion of the WTU depicted in Figures 1 and 2, and which also includes the droplet generation system. This system comprises multiple meshed spheres subjected to jet streams of water from several nozzles, which are components of the RCS.
Figure 7 schematically illustrates a sprinkler system constituting part of the droplet generation system to produce droplets of water entering the WTU.
Figure 8 illustrates exchange of *CO₂* molecules from water to air within the droplet generation system.
Figure 9 schematically illustrates a WTU in accordance with a second embodiment of the invention. Figure 9A depicts the WTU with a partially removed sidewall and a feedback conduit that enables the flow of water from the lower to the upper part. Figure 10B provides a detailed view of a pump and valve system that ensures controlled distribution of water flow to both the tank of the aquaculture system and the WTU.
Figure 10 schematically illustrates a water distributor arranged in an upper part of the WTU for ensuring horizontal distribution of water across an upper divider prior to entering the droplet generation system.
Figure 11 schematically illustrates part of an aquaculture system with a WTU in accordance with a third embodiment of the invention.
Figure 12 schematically illustrates a WTU in accordance with a fourth embodiment of the invention.
Figure 13 schematically illustrates a WTU in accordance with a fifth embodiment of the invention.

### Detailed Description

In the following description, numerous specific details are introduced to provide a thorough understanding of embodiments of the claimed apparatus, system and method. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

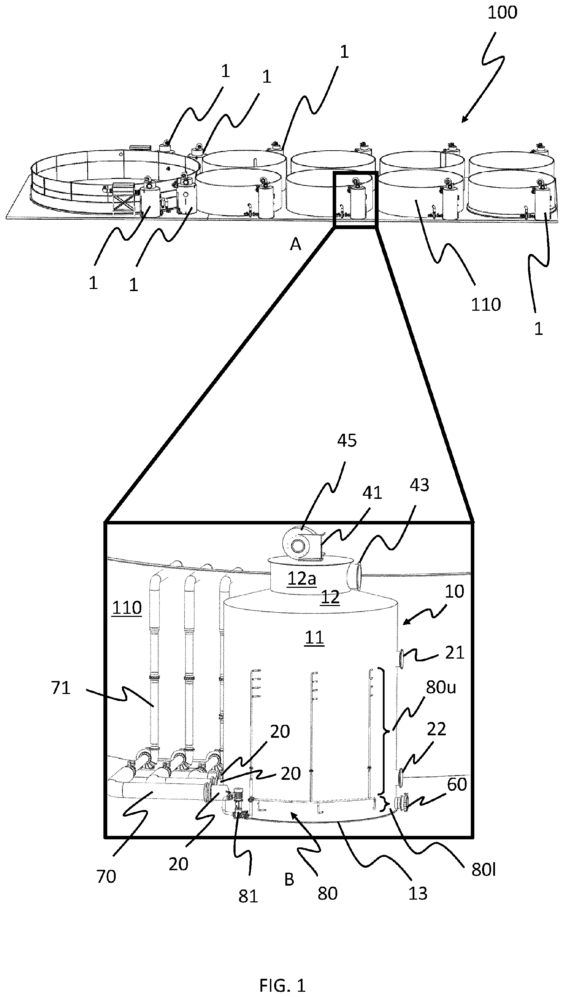

Figure 1A shows a typical land-based aquaculture 100 comprising a multiple number of tanks 110 containing aquatic species in fresh water or seawater. Depending on volume, each tank 110 may be connected to one or more inventive water treatment units (WTU) / aerators 1 particularly configured for reducing *CO₂* content in the water. The illustrated example depicts one large tank 110 connected to four WTUs 1 and six smaller tanks 110 connected to one WTU 1 each.

Figure 1B show in further detail an example of a WTU/aerator 1 in figure 1A. The particular WTU 1 comprises a circular container 10 with a vertical wall 11, a container base / bottom 13 and a container top 14. The container 10 further comprises a closeable water inlet 19, three closeable water outlets 20, closeable service holes 21-22 providing access inside the container 10 and a closeable drain outlet 60. Each of the three water outlets 20 are coupled to respective water tubes 70 leading the water back to the tank(s) 110. Note that the number of water inlets 19 and the number of water outlets 20 with their respective tubes can be varied according to the specific requirement of the WTUs 1. For example, for large WTUs 1 configured to receive and treat a large flow of water, it is advantageous to equip the WTU 1 with several water inlets 19 and/or several water outlets 20.

The WTU 1 in figure 1B further shows a regular cleaning system (RCS) 80 for enabling cleaning operations of components/sections inside the container 10 with minor or no disruption for the operation.

The RCS 80 of figure 1B comprises an upper RCS (U-RCS) 80u and a lower RCS (L-RCS) 80I for cleaning of components or parts at an upper and a lower part within the container 10. The U-RCS 80u comprises a first branch 83 leading water from the lower part of the container 10 to a plurality of upper nozzles 87 situated at an elevated part. The L-RCS 80I comprises a second branch 84 leading water from the lower container part to a plurality of lower nozzles 88 situated approximately at the same vertical level as the water outtake. The first and second branches 83,84 are in fluid communication with a joint RCS tube 82 and a joint RCS pump 81.

Arranged on top of a separate top compartment 12a forming part of the container top 12 is shown a fan casing 45 having an air inlet 41 and an outer air outlet 43 for allowing air to enter the container 10 and to be released from the container 10, respectively. The fan casing 45 contains a pressure regulating device for ensuring flow of air within the container may, Examples of such a pressure regulating device may be a blower fan or an extractor/suction fan 46 (see figure 17) or a combination of both.

Figure 1B further depicts two closeable service holes 21,22 positioned at an upper part and a lower part of the container 10 to facilitate manual replacement and/or maintenance of inner components.

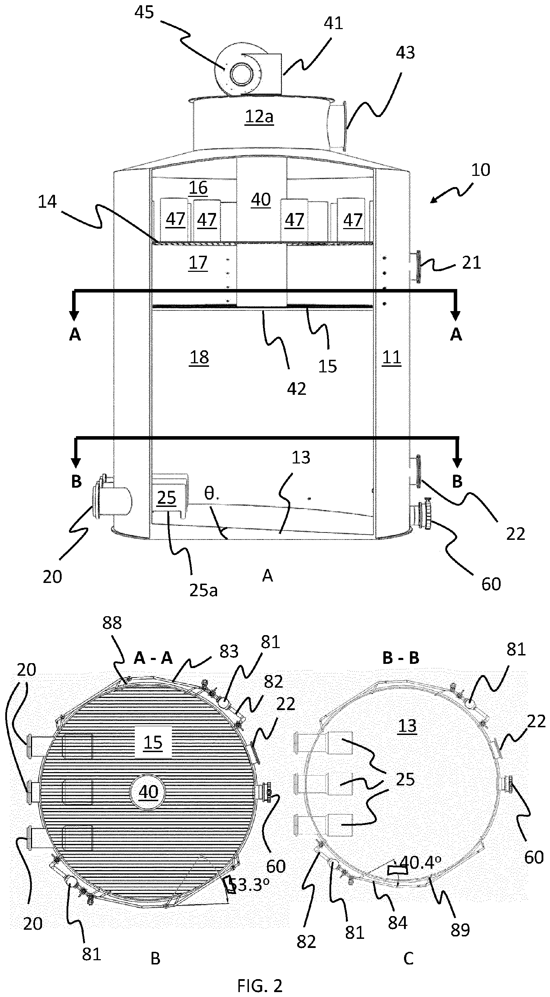

Figure 2A depicts the same WTU 1 as shown in figure 1, with a portion of the container wall 11 removed to reveal the inner structure of container 10. The container 10 is segmented into an upper container chamber 16, a middle container chamber 17, and a lower container chamber 18 by an upper divider 14 and a lower divider 15, both featuring through-going holes to permit water flow.

An air conduit 40 is connected at its upper end, which is in fluid communication with the air inlet 41, and has an open end extending into the lower container chamber 18. Hence, when air is let into the air inlet 41 by suction or extraction, the air flows through the air conduit 40, into the lower container chamber 18, and further up into the upper container chamber 16 via the middle container chamber 17. The air is raised due to over pressure at the air inlet 41 generated by the blower fan or due to under pressure at the outer gas outlet by the extractor fan 46 or a combination of both. As shown, the upper container chamber 16 contains a plurality of chimneys 47 guiding the air further up towards the outer air outlet 43 to avoid that the air mixes excessively with the water flowing into the water inlet 19.

Within the lower container chamber 18, an inner tube 25 is arranged with one end in fluid communication with the water outlet 20. The opposite end is closed, while a section facing the bottom 13 features one or more openings 25a. This arrangement effectively reduces the amount of bubbles in the water being transported to or near the bottom 13, thereby reduces or avoiding that air enters the tank(s) 110.

The bottom 13 is depicted as slanted towards the drain outlet 60 at an angle θ, facilitating the removal of solid-state sediments accumulating thereon using the L-RCS 80I.

Figures 2B and 2C show cross-sectional views of the WTU 1 along sections A-A and B-B, respectively, but with the difference that the previously described RCS 80 is included. As best seen in Figure 2B, the lower divider 15 is, in this example, a grate.

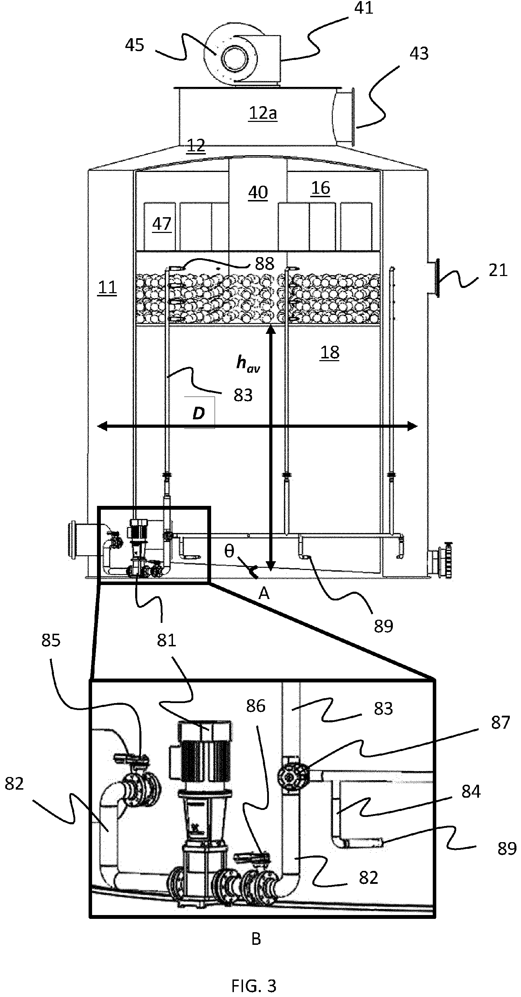

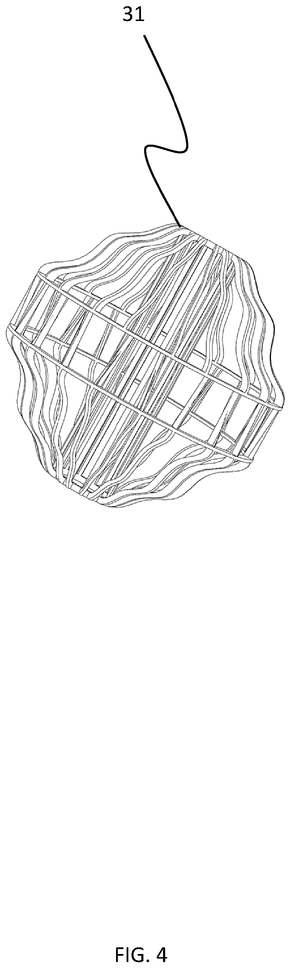

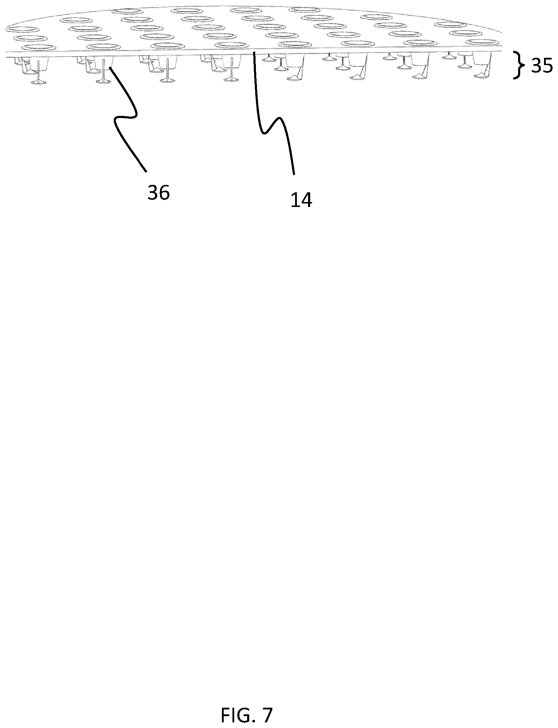

Figure 3A shows the same WTU 1 as in figure 2A with the exception that the RCS 80 is added and a droplet generator system 30 is arranged above the grate 15 within the middle container chamber 17. The droplet generator system 30 is composed of a high number of meshed balls 31 (see also figure 7) which is found most effective to create droplets when water is flowing through, thus creating a large increase in the water's surface area being exposed to air molecules flowing upwards from the lower container chamber 18. A specific example of such a meshed ball 31 is shown in figure 4. The meshed balls 31 is preferably made of plastic.

The height of the droplet generator system 30 seen in figure 3A may be in the range 0.75 m to 2 m.

The regular cleaning of the droplet generator system 30 is achieved by pumping water into the RCS tube 80 and further into the first branch(es) 83. The upper nozzle(s) 87 at the ends of the first branch(es) 87 thus create a jet stream towards the droplet generator system 30, thus achieving an effective cleaning process performed even when water from the tanks 110 continue to flow through the fluid inlet(s) 19.

The distribution of water from the lower part of the WTU 1 to clean various components within the container 10 is further detailed in figure 3B. As seen, water existing through a water outlet at the lower container chamber 18 is pumped into the RCS tube 82 by the RCS pump 81. Control of water from the container 10 is in this example achieved by three RCS valves; a first RCS valve 85 adjacent the water outlet, a second RCS valve 86 downstream the RCS pump 81 and one or more third RCS valves 87 arranged in the junction(s) between the first branch(es) 83 leading water to the upper nozzle(s) 88 and the second branch(es) 84 leading water to the lower nozzle(s) 89. In figure 3B a 3-way valve is shown for the specific junction. However, 2-way valves may also be used.

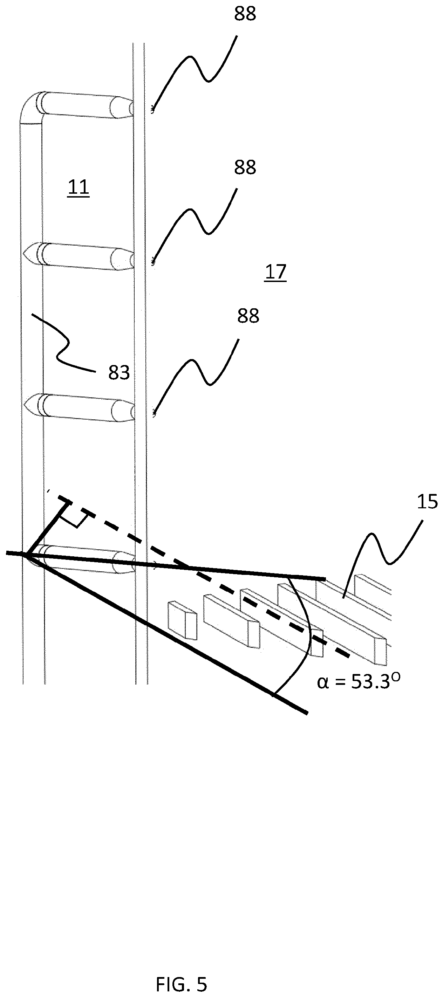

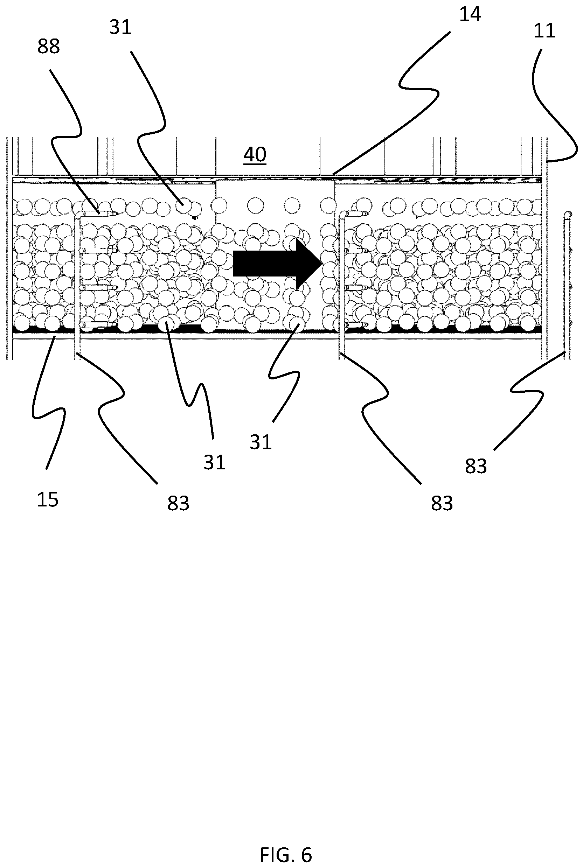

Since the droplet generator system 30 comprises in this particular example a plurality of meshed balls 31 completely confined within the middle container chamber 17, an orientation of the upper nozzle(s) 88 having a non-perpendicular angle relative to the container wall 11 as illustrated in figures 5-6 causes a rotation of the balls 31 in direction of the filled arrow. This rotation further increases the effectiveness and quality of the regular cleaning. In figure 2B and figure 5 an orientation of α = 53.3° is given. However, any non-perpendicular angle creating a rotational movement of the balls 31 can be envisaged.

Figure 7 shows a sprinkler system 35 comprising a plurality of sprinklers 36 evenly distributed on the lower surface of the upper plate 14. Such a sprinkler system 35 may form part of a droplet generator system 30 replacing, or supplementing, the above-described meshed balls 31.

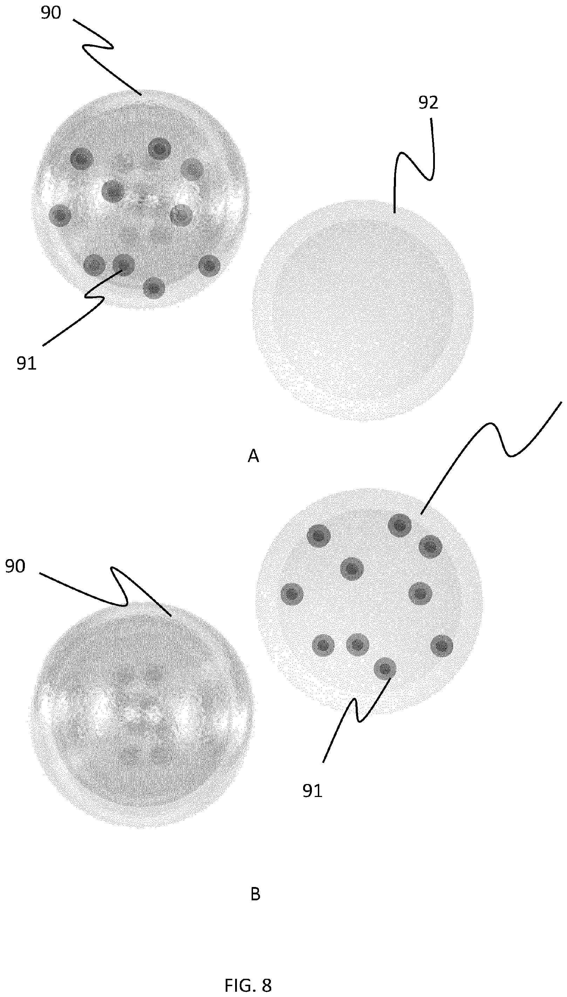

The principles of reducing *CO₂* content in the water using the aforementioned WTU 1 are schematically illustrated in Figure 8. Water molecule clusters or droplets 90 containing *CO₂* molecules 91 interact with rising air clusters. Since *CO₂* molecules 91 more readily couple with air than water, an exchange occurs where *CO₂* molecules 91 are transferred from the water droplets 90 to the air clusters 92. Consequently, the *CO₂* molecules 91 are transported with the air into the upper container chamber 16, through the chimneys 47, and out via the outer air outlet 43.

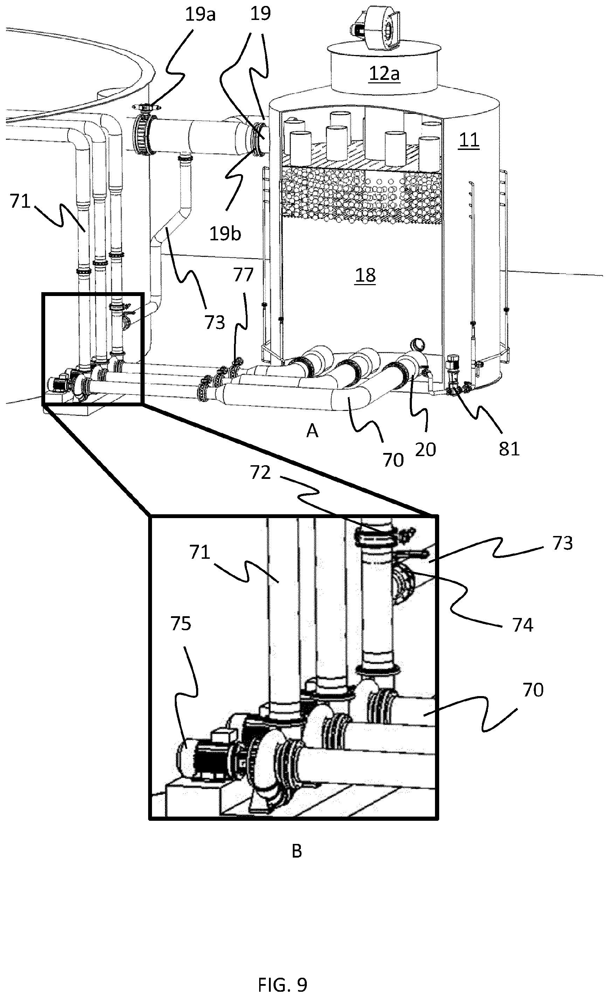

Figure 9 shows a second embodiment of the WTU 1. The design and configuration are similar to the WTU 1 of the first embodiment described above (see in particular figure 1B) but with the exception that the water tube 70, or each water tube 70 in case of several, guiding the water from the lower container chamber 18 to the tank(s) 110 are divided into a main branch 71 going into the tank 100 and a feedback branch 73 leading the water back into the upper container chamber 16 via the water inlet(s) 19. The water flow within the main branch 71 and the feedback branch 73 are controlled by one or more main branch valves 72 and one or more feedback branch valves 74, respectively. A three-way valve arranged at the junction between the main and the feedback branches may also be envisaged. In the illustrated example each water tube 70 is coupled to a dedicated water tube pump 75. However, other configurations may be imagined such as having a joint tube pump 75 for pumping water through a plurality of water tubes 70.

With this second embodiment configuration, a more thorough cleaning process may be performed by closing the main branch valve(s) 72, closing the water inlet valve 19a and opening the feedback branch valve(s) 74, thereby filling the container 10 with water. One or more cleaning detergents can be added to the water contained with the container 10 and the feedback branch 73 to further increase the quality and effectiveness of the cleaning. In addition, or alternatively, the RCS 80 may be operating simultaneously to the feedback cleaning process.

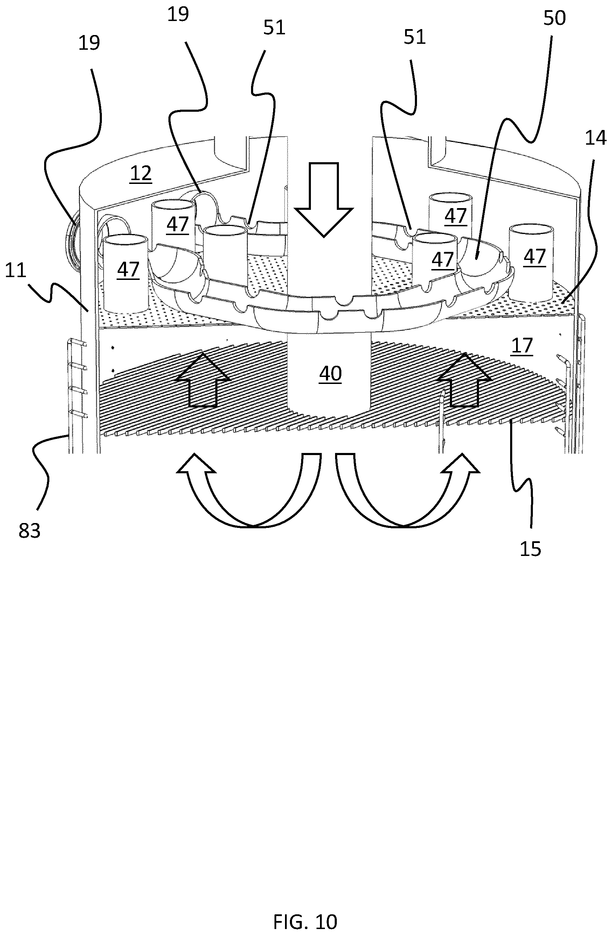

In particular for large WTUs 1 where the rate of water flow entering the upper container chamber 16 is high, for example above 0,5 *m³*/*s,* it is considered advantageous to add a water distributor 50 as illustrated in figure 10. In this example, the water distributor 50 is an open, concave channel shaped like a horseshoe, surrounding the throughgoing and centrally arranged air conduit 40. Each end of the channel is positioned adjacent to the respective water inlets 19. The upper edge of the channel 50 features a plurality of recesses 51, evenly distributed along the edge.

This configuration ensures that the incoming water is distributed along the entire, or almost the entire, cross-sectional area of the upper plate 14, thus enabling a more efficient exchange of *CO₂* between the water and the air within the middle container chamber 17.

Note that the droplet generator system 30 has been removed in figure 10, primarily for illustrative purposes.

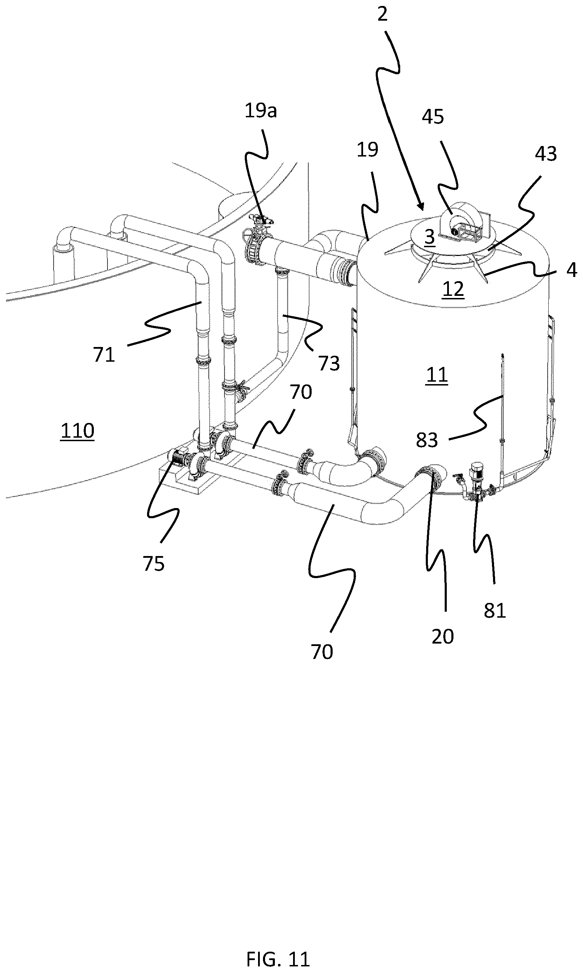

Figure 11 illustrates a third embodiment of the WTU 1. The design and configuration are similar to the WTU 1 of the second embodiment described above (see Figure 9), with the exception that the fan casing 45 is arranged on an upper framework 2. This framework 2 includes an upper plate 3, positioned with an offset from the container top 12 by a support structure 4, thereby creating a gap that serves as the air outlet 43. This third embodiment is advantageous for systems 100 used outdoors where the exhaust air after removal / reduction of *CO₂* in water are released directly into the environment. In contrast, the configuration of the air outlet 43 shown for the first and second embodiments are particularly adapted for being connected to a tube guiding the exhaust air to an external location distant from the WTU 1, for example from a location indoor to a location outdoor.

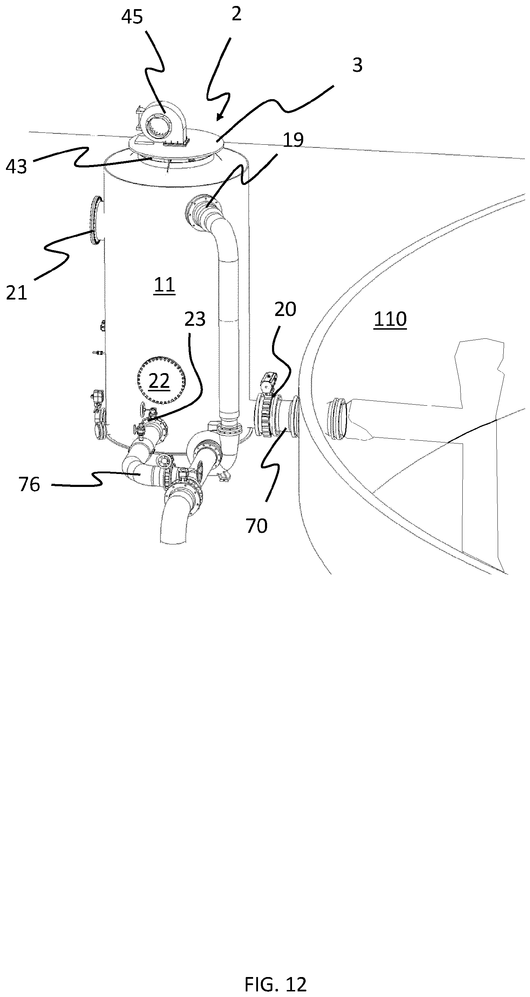

Figure 12 shows a fourth embodiment of the WTU 1 which primarily differs from the third embodiment WTUs 1 in that its height exceed the height of the connected tank(s) 110 and thus also the height of the tank's water outlet. To overcome this challenge, the water existing the tank(s) 110 is pumped up to the water inlet 19 situated at the upper part of the container 10 using a dedicated pump and/or one or more of the pumps mentioned above. As seen, the fourth embodiment WTU 1 also include a feedback loop for more thorough cleaning. As for the third embodiment WTU 1, water from the lower container chamber 18 may be pumped into the water inlet 19 by a feedback loop and a valve system. However, in the fourth embodiment of WTU 1, this is achieved through a dedicated feedback water outlet 23, which is connected to a second water tube 76 in fluid communication with the water inlet 19.

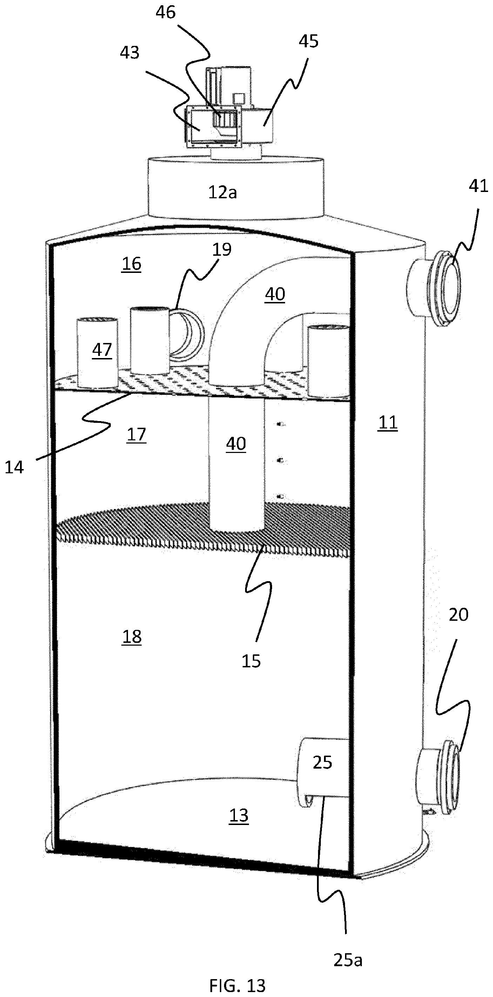

Figure 13 illustrates a fifth embodiment of the WTU 1. This WTU 1 differs from the first to fourth embodiments in that the air inlet 41 is positioned on the side of the container 10, and the outer air outlet is formed as an opening in the fan casing 45. The fan 46 shown within the fan casing 45 is an extractor fan, creating an under-pressure within the container 10, thereby facilitating the desired upward movement of air exiting from the inner air outlet 42 within the lower container chamber 18.

In the following, the operation of the WTU 1 and related the aquaculture system 100 will be described in more detail.

Between the bottom grate 15 and the bottom 13 of the aerator tank 10, there will normally be a volume of water that has been treated (aerated) and the water table for this volume of water will normally be at a given distance from the grate 15. Flowing water entering via the inlet 19 passes through the water distribution plate 14 further through the layer of aeration medium / droplet generator system 30, through the grate 15 to a volume of water with a water table and exiting the unit through the outlet 20 located in the side wall 11 of the container 10 near the bottom 13 of the container 10.

The volume of water between the grate 15 and the bottom 13 of the aerator 1 will act as a volume of slowly axially downward directed water velocity. This low water velocity is preferred because gas bubbles suspended mainly in the upper part of this water volume can rise upwards, break the water table, and thus enter the air-filled space between the water table and the grate 15.

The rise rate of air bubbles is determined by the diameter of the air bubbles and the chemical composition of the water - e.g. salinity as in seawater. Small bubbles have a slower rise rate than large bubbles. If the bubbles are so small that they can be described as microbubbles, they will have a low rise rate. If the downward velocity of the water in the bottom chamber 18 is greater than the rise velocity of the bubbles, the bubbles will be carried downwards in the water volume and will eventually be able to carry the water out through the outlet 20. As mentioned above, this poses a risk of unwanted transfer of gas from the air bubbles to outgoing water, and thus increasing gas saturation and total gas pressure (TGP). To prevent this from happening, the diameter of the bottom chamber (D) and thus the area (A) of the cross-section should be adjusted in relation to the amount of water flowing so that the downward water velocity is lower than the rising speed of air bubbles.

The bottom section's area A (m²) of the cross-section is given by: $A = π {\left(D/2\right)}^{2}$

The flow of water *Q* can be defined in cubic meters of water per hour (m³/hour).

The water velocity *v* in this volume is determined by the system's water flow *Q* and the area of the bottom section *A* such that: $v = Q / A$

With specified units for *Q* and *A* as above, the speed of the water will be given as meters per hour (*m*/*h*).

For aerators that are to be used for aeration of seawater or brackish water with more than about 10 per thousand salt, it will be preferable that the diameter of the aerator is such that the speed of the water in the bottom section is in the range of 110 m/hour (3 cm/s) or lower.

Water to be aerated is supplied to the unit's inlet 19 at the top of this, and the water can be pumped or supplied via gravity. The water is distributed over the entire cross-section of the aerator on the water distribution plate 14 and drained down into the middle section (aeration chamber) 17 through holes in the water distribution plate 14 and down onto the layer of aeration medium 30, which may consist of, for example, nearly spherical balls 31 made of plastic material. Downward irrigation water is split up at the passage through the aeration medium 30 to create the best possible contact surface between air and water in this chamber 17. The water passes through the grate 15 and falls onto the water table in the lower section 18 of the aerator 1.

For example, supplied air is blown in from a fan into the axially located pipe 40 for the transport of air down to the underside of the grate 15 where the air is distributed in the space formed between the water table and the grate 15. In this way, the air is distributed evenly over the entire 15 cross-sections of the grate and flows upwards through the grate, further upwards through the layer of aeration medium 30 in the aeration chamber 17. Upward flowing air passes through pipe 47 which is located throughout on water distribution plate 14 to the air space at the top of the aerator 1 and leaves the top of the aerator 1 through opening(s) 43. For outdoor systems, this can be under a plate 3 out to the open air (see Figure 12). For aerators 1 placed indoors, outgoing air can go out through a cylinder 43 at the top of aerator 1 where a pipe/duct can be placed to this cylinder 43 that can be connected to any ventilation system from a production hall.

The principle of water trickling downwards meets upward air flow in the aeration chamber is called counter-current aeration. This is considered to be the most efficient method of aeration in which maximum driving force is achieved for the transition of gases between water and air based on equilibrium processes.

The flow of air in the air medium *Q_{L}* is controlled in relation to the water flow *Qv.* The correct *Q_{L}*/*Qᵥ ratio* depends on the current requirements/needs for the efficiency of aeration. To remove *CO₂* from the water with flowing air, there should be a high air flow in relation to water flow. In this case, the *Q_{L}*/*Qᵥ* ratio should preferably be in the range of 5-10.

When air is injected from the fan, the pressure in the aeration chamber 17 where the aeration medium 30 is located will normally be in the range of 1 - 5 mbar above the current air pressure, i.e. 100-500 Pa.

Water that has passed through the aeration chamber 17 through the grate 15 into the water volume below it is referred to as aerated water.

### Alternative control of air flow in the aerator medium 30.

Alternative controlled airflow is to allow incoming air to be supplied via a valve or similar device to create negative pressure to the pipe 40. In this case, the air is drawn through the unit by connecting a negative pressure fan 46 or similar to the air outlet 43 for the unit 1. By extracting the air from unit 1 and at the same time restricting the inlet 41 for air with a valve or similar, a negative pressure will be created throughout unit 1. At a negative pressure of, for example, -50 mbar (5 kPa) in relation to local atmospheric pressure (around 1 kPa), a total gas pressure (TGP) of 95 %, or about 95%, of local atmospheric pressure can be achieved at equilibrium

Depending on the type of fan technology chosen, controlled air flow can also be achieved at the same time as negative pressure so that (*Q_{L}*/*Qᵥ*) is in the desired range 5-10. In this way, both good efficiency for *CO₂* removal and a reduced total gas pressure (TGP) in relation to local air pressure are achieved.

### Fouling and accumulation of organic matter during operation.

In *CO₂* aerators used to aerate water from fish tanks where the water is contaminated with residues consisting of organic and inorganic material from the feeding of fish, strong fouling will occur through the growth of bacteria and fungi on all surfaces that are in contact with flowing water. The pollution in the water acts as a nourishment for the growth of microorganisms that are naturally found in water and that can use this pollution as a growth medium. Biological growth on surfaces will form a biofilm, i.e. coatings of sessile organisms where the coating can have varying thicknesses. Also, some of the particles that come with the water can stick to the biofilm and increase its volume/thickness. Such biofilm will also adhere to all surfaces of the mesh bales 31 that make up the aeration medium 30 where the water should trickle downwards and be split up as much as possible to form a large surface against flowing air. This biofilm growth can lead to thick layers of growth, and if fouling is allowed to continue unhindered, it will eventually lead to resealing of the aeration medium 30. This also means that splitting the water in the aeration medium 30 becomes significantly less efficient. The result is a strong limitation in the surface area between air and water with significantly reduced efficiency of the aeration process as a result. One of the main goals of the design and function of this *CO₂* aerator 1 is to ensure that the described fouling/biofilm growth is removed so that the aerator 1 is always as clean as possible. This is the most important premise for maintaining the aerator's 1 efficiency and predictability with regard to *CO₂* removal. The cleaning process to be able to achieve control of biofilm growth is carried out as a daily automatic cleaning procedure described above and further detailed below.

### Automatic cleaning (regular e.g. daily)

To prevent and remove existing fouling in the aeration medium 30, it can be equipped with specialized components and an automatic control for fast and efficient washing that removes biofilm and incipient sediments formed from particles/feed residues. A short-term automatic wash cycle is carried out daily (or with other frequency) so that the aerator 1 is kept sufficiently clean and with stable water treatment efficiency. Thin residues of biofilm and small residues of sediments can occur even after such frequent cleaning, but the efficiency of the aerator 1 is not significantly affected by this. In addition to achieving stable water treatment, the automated washing process makes operation in the fish farm rational and with little time spent on manual cleaning of water treatment units (WTUs) 1.

In the automatic washing process, the aeration unit 1 is filled with water from a fish farming vessel 110 via valve control and/or frequency control of pumps. By increasing the water level in the aerator 1 so that it is level with or slightly below the plate 14 for water distribution at the top of the aeration tank 10, the aeration medium 30 will float up and remain suspended in the water volume between the water distribution plate 14 and the grate 15 on which the aeration medium 30 is located. Water from the fish tank 110 circulates through the aerator 1 at all times during the wash cycle. However, the air passage from the fans 46 should be stopped while washing is in progress. The aerator 1 therefore does not remove *CO₂* from the water while it is being washed.

The upper flush nozzles/water jet nozzles 88 are located in the aerator 1 outer wall between the water distribution plate 14 and the grate 15 under the aerator medium 30, i.e. in the wall 11 of the aerator container 10. These nozzles 88 are directed inwards into the aeration chamber 17 with an angle of 15 - 45 degrees in relation to the tangent at the point where the nozzle 88 is placed in the wall 11 of the circular aerator container 10

Water from a pressure pump / RCS pump 81 creates high-velocity water jets horizontally inwards into the volume where the aeration medium 30 is suspended. These water jets will create a circular motion for water and the aeration medium 30 in this part of the aerator's 1 volume (see Figure 7). The shear forces of the water, together with the flushing effect of the water jets in the spray nozzles 88, will cause biofilm to detach from the aeration medium 30 and be released into the water and led out of the aerator 1 with flowing water.

The automatic wash cycle is controlled via a programmable limit switch (PLC) or similar control unit that regulates start/stop as well as pump speed and valve settings. The entire daily wash cycle will take about 10 - 15 minutes. At the end of the washing process, the water level in the aerator 1 is lowered again to a normal level and the trickling of water together with air circulation through the aerator 30 continues until the next wash cycle is automatically started.

The aerator may be equipped with one or more pressure sensors mounted in the lower part of the aerator to measures the level of water inside the unit. The circulation pump 75 regulates speed based on the level measured by this sensor, and to fill the aerator 1 with water to the level chosen by an user, e.g. by operating a graphical user interface (GUI).

### Occurrence and control of fish pathogens (fungi, bacteria and viruses) in biofilms and sediments.

In all farming of living organisms - including fish - there will be a risk of the occurrence of potentially infectious and pathogenic organisms. These are found as part of the natural environment and occur in the air, soil and water where farming activities take place. The pathogenic organisms are found both in the water where the fish stay and can be adsorbed to or "hide in" the biofilm described above. Such pathogens can also be found in sediments at various locations in the water treatment unit 1 - although these sediments are small and insignificant to the actual water treatment process for which the aerator 1 is designed. Since the biofilm in the system acts as a form of "protection" for pathogens, they can stay there for a long time. Some pathogens; e.g. Yersinia ruckeri - a bacterium that causes red mouth disease in salmonids, can grow and multiply in biofilm since it has the ability to use organic matter in the biofilm as a growth medium. Other pathogens such as IPN viruses can infect new hosts and be active for about 6 months in a biofilm as long as it contains a certain degree of moisture. As the examples show, different pathogens can have a great ability to survive in materials that settle as biofilm in fish farms 100, and thus have the possibility of infecting several generations/groups of fish.

Another factor that entails a risk with thick biofilm and/or sediments is that inside the biofilm/sediments there can be a lack of oxygen because the microorganisms' metabolism consumes more oxygen than can be transported there. If this happens with seawater present, the lack of oxygen can favor the growth of organisms that form hydrogen sulfide (*H₂S*) from the sulfate of seawater. Hydrogen sulfide is extremely toxic to fish, and the removal of all sediments and thick biofilms from the system is therefore important in this regard as well.

As part of maintaining the best possible fish health, it must be avoided that subsequent fish groups are infected with pathogens that previous fish groups had in the same tank system. This can be achieved by a procedure that involves thorough cleaning and disinfection of the system when a group of fish is moved from the tank(s) 110 the aerator 1 is connected and completed before new fish are put into the same tank 110. The aerator 1 with associated equipment and control also enables a simple and rational procedure for carrying this out. As with daily cleaning, this procedure also requires little man-time, which is important when several units 1 need to be cleaned at the same time.

This cleansing process is called *"deep cleansing and infection control"* and is described in more detail below. Reference is also given to figures 10, 12 and 13 and their related text.

### Method for deep cleaning and infection control between insertion of fish groups.

The procedure is typically conducted every time the 110 fish tanks are empty of fish. But they can also be full of water. The air fan 46 is stopped during the entire procedure. Aerator 1 is filled with water and isolated from the water volume in fish tank 110 by closing the valves 72 and stopping the circulation pumps connected to these. A common fluid conduit valve 77 from the container 10 is kept open. Valve 72 closes and valve 74 opens. The circulation pump 75 can be stopped temporarily or run at a low speed. By leaving valve 19a open, aerator 1 will be filled with water and this will be closed when the water table in aerator 1 reaches approximately the right level, which is approximately at the level of the water distribution plate 14. Valve at inlet 19b to aerator 1 is open. Now the volume in the aerator 1 is isolated from the water volume in the tank 110, and the tank 110 can optionally be emptied of water to be washed separately (typically manually).

Chemicals can be added to the water volume limited to the volume in the aerator 1 and associated pipes 70,73. Circulation pump 75 is regulated for increased pump capacity. Now the water in the aerator 1 will circulate in a loop via the inlet, through the aerator's 1 internal volume, via outlet 20 which is connected to pump 75 and back to the aerator's 1 inlet 19. At the same time, pressure pump 81 is started, which directs pressurized water through the 88.89 spray nozzles. The upper spray nozzles 88 will cause movement in the aerator 30, while the lower spray nozzles 89 will ensure rotating water volume and high shear forces along the bottom 13 and out against the wall 11 down towards the bottom 13 of the aerator 1

This setting can last for many hours where chemicals and water velocity with subsequent strong shear forces cause all biofilm and sediments in unit 1 to loosen and become suspended in the water.

After the aerator 1 has been running in this mode for a sufficiently long time, the pumps are stopped 75,81. Water with suspended/dissolved particles is drained out to drain 60 via a strainer. After this, the aerator 1 can be filled with clean water and the pumps 75,81 run for a limited period of time, e.g. a few hours to flush out residues of chemicals and particles. Aerator 1 is then filled with clean water again and any disinfectant is added, which circulates and is distributed by running the pumps 75,81. The length of time for this circulation can be determined by the type of disinfectant used. Water with disinfectant is drained to drain 60 via the bottom valve.

The aerator 1 is now clean and disinfected and ready to be used on the next group of fish in the system.

It will be understood that the invention is not limited to the specific embodiments described herein. Various modifications and changes can be made without departing from the spirit and scope of the invention as defined by the following claims. The embodiments described are illustrative and not restrictive, and it is intended that all equivalents, alterations, and modifications that fall within the scope of the claims be included in the invention.

### List of reference numerals:

- 1: Apparatus / water treatment unit / aerator / degasser / degasser tower / *CO₂* aerator
- 2: Upper framework
- 3: Upper plate
- 4: Support structure
- 10: Container / aerator container
- 11: Container wall
- 12: Container top
- 12a: Top compartment
- 13: Container base / bottom
- 14: Upper divider / upper plate / water distribution plate
- 15: Lower divider / grate / bottom grate
- 16: Upper container chamber
- 17: Middle container chamber / aeration chamber
- 18: Lower container chamber
- 19: Fluid inlet / water inlet
- 19a: Fluid inlet valve / water inlet valve
- 19b: Second fluid inlet valve / second water inlet valve
- 20: Fluid outlet / water outlet
- 21: Middle service hole
- 22: Lower service hole
- 23: Feedback water outlet
- 25: Bubble suppressing mechanism / inner tube
- 25a: Through going hole / opening
- 30: Droplet generator system / aeration medium / fluid disperse mechanism
- 31: Droplet generator / meshed ball / fluid dispersing element
- 35: Sprinkler system
- 36: Sprinkler
- 40: Gas conduit / air conduit
- 41: Gas inlet / air inlet
- 42: Inner gas outlet / inner air outlet
- 43: Outer gas outlet / outer air outlet
- 45: Fan casing
- 46: Under pressure unit / extractor fan
- 47: Chimney
- 50: Fluid distributor
- 51: Recess / hole
- 60: Drain outlet / drain
- 61: Drain valve
- 70: Fluid conduit / water tube
- 71: Main branch
- 72: Main branch valve
- 73: Feedback branch
- 74: Feedback branch valve
- 75: Fluid conduit pump / water tube pump / circulation pump
- 76: Second water tube
- 77: Common fluid conduit valve
- 80: Regular cleaning system (RCS)
- 80u: Upper regular cleaning system (U-RCS)
- 80I: Lower regular cleaning system (L-RCS)
- 81: Regular cleaning system pump / RCS pump
- 82: Regular cleaning system conduit / RCS tube
- 83: First branch
- 84: Second branch
- 85: First regular cleaning system (RCS) valve
- 86: Second regular cleaning system (RCS) valve
- 87: Third regular cleaning system (RCS) valve
- 87b: Fourth regular cleaning system (RCS) valve
- 88: Upper nozzle / upper spray nozzle
- 89: Lower nozzle / lower spray nozzle
- 90: Water molecule cluster / water droplets
- 91: *CO₂* molecule
- 92: Air cluster
- 61: Lower nozzle
- 100: System / aquaculture
- 110: Tank / fish tank
- *H*: Inner vertical height of container
- *h_{LD}*: Height between lower edge of lower divider 14 and container base 12
- *D*: Inner diameter of container
- *Θ*: Angle of container base from horizontal plane
- *α*: Angle of upper nozzle
- *β*: Angle of lower nozzle
- *F_{F}*: Fluid flow rate (*m³*/*s*)
- *F_{G,min}*: Gas flow rate (*m³*/*s*)

## Claims

1. An apparatus (1) for regulating an amount of gas in a fluid,
wherein the apparatus (1) comprises
- a container (10) for containing fluids, wherein the container (10) comprises
∘ a container top (12),
∘ a container base (13),
▪ wherein a center axis through the container top (12) and the container base (13) defines a vertical direction of the container (10)
∘ an upper divider (14),
∘ a lower divider (15),
▪ wherein the upper divider (14) and the lower divider (15) are arranged with vertical offsets from the container top (12), forming at least
• an upper container chamber (16),
• a middle container chamber (17) and
• a lower container chamber (18), and
▪ wherein both the upper divider (14) and the lower divider (15) display a plurality of throughgoing holes to allow fluids to flow vertically therethrough,
∘ a fluid inlet (19) configured to allow fluid to flow into the upper container chamber (16),
∘ a fluid outlet (10) configured to allow fluid to flow out of the lower container chamber 18),
∘ a droplet generator system (30) to generate droplets inside the middle container chamber (17) of the fluid flowing from the upper container chamber (16) and
∘ a gas conduit (40) extending to the lower container chamber (18), wherein the gas conduit (40) comprises
▪ a gas inlet (41) to allow gas to flow into the gas conduit (40) from a gas source and
▪ an inner gas outlet (42) located within the lower container chamber (18) to allow gas to flow out of the gas conduit (40) and into the middle container chamber (17).

2. The apparatus in accordance with claim 1, wherein the gas conduit (40) is extending to the lower container chamber (18) through the lower divider (15).

3. The apparatus in accordance with claim 1 or 2, wherein the container (10) comprises
- a fluid distributor (50) arranged withing the upper container chamber (16), wherein the fluid distributor (50) is configured to distribute the fluid along at least part of the upper divider (14) prior to entering the middle container chamber (17).

4. The apparatus in accordance with claim 3,
wherein the fluid distributor (50) is an annular ring arranged on the upper divider (14),
wherein the annular ring displays one or more recesses and/or holes (51).

5. The apparatus in accordance with any one of the preceding claims, wherein the droplet generator system (30) is arranged at least partly within the middle container chamber (17).

6. The apparatus in accordance with any one of the preceding claims, wherein the apparatus (1) further comprises
- an upper regular cleaning system (80u) comprising an upper nozzle (88), wherein the upper regular cleaning system (80) is configured to create a jet stream of fluid towards the droplet generator system (30).

7. The apparatus in accordance with any one of the preceding claims, wherein the apparatus (1) further comprises
- a lower regular cleaning system (80I) comprising a lower nozzle (89) configured to create a jet stream of fluid into the lower container chamber (18).

8. The apparatus in accordance with any one of the preceding claims, wherein the apparatus (1) further comprises
- an upper regular cleaning system (80u) comprising an upper nozzle (88) configured to create a jet stream of fluid towards the droplet generator system (30) and
- a lower cleaning system (80I) comprising a lower nozzle (89) configured to create a jet stream of fluid into the lower container chamber (18).

9. The apparatus in accordance with any one of the preceding claims, wherein at least a part of the container base (13) is slanted downward towards one or more drain outlets (60).

10. The apparatus in accordance with any one of the preceding claims, wherein a fluid conduit (70) comprises
- a main branch (71) for guiding fluid to an exterior location (110),
- a feedback branch (73) for guiding fluid into the upper container chamber (16),
- a fluid pump (75) for pumping fluid from the fluid outlet (20) to the upper container chamber (16) via the feedback branch (73) and
- a fluid conduit valve (72,74) for controlling transport of fluid into the main branch (71) and the feedback branch (73).

11. The apparatus in accordance with any one of the preceding claims, wherein the container (10) further comprises a bubble suppressing mechanism (4) arranged within a lower half of the lower container chamber (17).

12. A system (100) for regulating a gas in one or more tanks (110) of fluid,
wherein the system (100) comprises
- the tank (110) for containing water and a plurality of fish and
- an apparatus (1) in accordance with any one of the preceding claims,
wherein the fluid inlet (19) and the fluid outlet (20) are in fluid communication with the tank (110).

13. A method for regulating an amount of gas in a fluid by use of an apparatus (1) in accordance with any of claims 1-11, wherein the method comprises the following steps:
*A:* initiating a flow of fluid into the upper container chamber (16) through the fluid inlet (19) at a fluid flow rate *F_{F}*;
*B:* distributing the flow of fluid across the upper divider (14); and
*C:* pressurizing the gas conduit (40) to ensure a flow of gas from the gas source, out of the inner gas outlet (42) and further out of the container (10) via an outer gas outlet (43) located above the droplet generator system (30), wherein the flow of gas is above a minimum threshold gas flow rate *F_{G}, ₘᵢₙ* depending on the fluid flow rate *F_{F}.*

14. The method in accordance with claim 13, when dependent on claim 10, wherein the method further comprises the steps of
- *D:* stopping the flow of gas within the gas conduit (40);
*E:* closing the main branch (71);
*F:* filling the container (10) with fluid to a level above a predetermined cleaning level;
*G:* cleaning an interior of the container (10) by using at least one of
- adding a cleaning agent to the fluid within the container (10) and
- using a regular cleaning system (80) forming a part of the apparatus (1);
*H:* lowering the amount of fluid within the container (10) to a level at or below a predetermined operational level.

15. The method in accordance with claim 14, wherein the method between step *E* and step *H* further comprises the step of
opening the feedback branch (73) for flow of fluid;
ensuring a circulation of fluid between the lower container chamber (18) and the upper container chamber (16) via the feedback branch (73) by use of a fluid conduit pump (75); and
closing the feedback branch (73) for flow of fluid.
